(19) Europäisches Patentamt
European Patent Office
Office européen des brevets

(11) **EP 2 073 041 A1**

(12) **EUROPEAN PATENT APPLICATION**

(43) Date of publication:
**24.06.2009 Bulletin 2009/26**

(51) Int Cl.:
***G01V 1/32*** (2006.01)

(21) Application number: **08172011.2**

(22) Date of filing: **17.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.12.2007 US 960176**

(71) Applicant: **Geco Technology B.V.**
**2586 BJ S'Gravenhage (NL)**

(72) Inventors:
- **Ferber, Ralf**
  **Horsham, Sussex RH13 5HE (GB)**
- **Velasco, Larry**
  **11431 Cairo (EG)**

(74) Representative: **Suckling, Andrew Michael**
**Marks & Clerk LLP**
**4220 Nash Court**
**Oxford Business Park South**
**Oxford**
**OX4 2RU (GB)**

(54) **Method to estimate a seismic ray parameter for a seismogram**

(57)    Method for estimating one or more ray parameters for seismograms. In one implementation, the method may include selecting a reference seismogram from a gather of seismograms, selecting a set of seismograms neighboring the reference seismogram, generating a set of seismic interferograms from the reference seismogram and the selected set of seismograms, slant stacking the set of seismic interferograms to generate a ray parameter seismic interferogram corresponding to the reference seismogram and estimating a ray parameter from the ray parameter seismic interferogram.

START 100

SORT A SEISMOGRAM GATHER BY INCREASING SOURCE TO RECEIVER DISTANCE — 110

SELECT A REFERENCE SEISMOGRAM — 120

SELECT AN OFFSET RANGE — 130

SELECT A SET OF SEISMOGRAMS NEIGHBORING THE REFERENCE SEISMOGRAM WITHIN THE OFFSET RANGE — 140

GENERATE A SET OF SEISMIC INTERFEROGRAMS BY THE CROSS-CORRELATION OR SPECTRAL DIVISION OF THE REFERENCE SEISMOGRAM WITH EACH OF THE SEISMOGRAMS IN THE SET OF SEISMOGRAMS — 150

TRANSFORM THE DELAY TIME AXIS OF EACH SEISMIC INTERFEROGRAM IN THE SET OF SEISMIC INTERFEROGRAMS TO A RAY PARAMETER AXIS — 160

STACK THE SET OF SEISMIC INTERFEROGRAMS TRANSFORMED TO THE RAY PARAMETER AXIS TO GENERATE A RAY PARAMETER SEISMIC INTERFEROGRAM CORRESPONDING TO THE REFERENCE SEISMOGRAM — 170

REPEAT STEPS 110-170 FOR EACH SEISMOGRAM IN THE GATHER TO GENERATE A RAY PARAMETER SEISMIC INTEROGRAM GATHER — 180

ESTIMATE THE RAY PARAMETER FROM THE RAY PARAMETER SEISMIC INTERFEROGRAM GATHER — 190

END     **FIG. 1**

EP 2 073 041 A1

**Description**

**BACKGROUND**

**Field of the Invention**

Implementations of various techniques described herein generally relate to seismic data processing.

**Description of the Related Art**

The following descriptions and examples are not admitted to be prior art by virtue of their inclusion within this section.

In a typical seismic survey, a plurality of seismic sources, such as explosives, vibrators, airguns or the like, may be sequentially activated at or near the surface of the earth to generate energy which may propagate into and through the earth. The seismic waves may be reflected back by geological formations within the earth. The resultant seismic wavefield may be sampled by a plurality of seismic sensors, such as geophones, hydrophones and the like, that may be various distances or offsets from the source. Each sensor may be configured to acquire seismic data at the sensor's location, normally in the form of a seismogram representing the value of some characteristic of the seismic wavefield against time. A seismogram may also be commonly known as a seismic trace. The acquired seismograms may be transmitted wirelessly or over electrical or optical cables to a recorder system. The recorder system may then store, analyze, and/or transmit the seismograms. The seismograms recorded as a result of an activation of a source may be referred to as a shot record or a gather. A plurality of gathers may result from a seismic survey. The seismic data may be used to detect the possible presence of hydrocarbons, changes in the subsurface and the like.

Each seismogram may contain noise as well as refracted waves. Seismic data may be processed by various algorithms to determine various characteristics such as onset time of the first wave in a seismogram, ray parameter and the like. The ray parameter may be the spatial derivative of the onset time. The ray parameter of a seismogram may be defined as the physical dimension of one over-velocity. The ray parameter may also be referred to as the dip or the spatial gradient of the seismogram. Ray parameter may be used in various applications to further analyze the seismic data.

A traditional method of interpreting seismic data may be to fit a series of straight lines to the travel-time data, and model the straight lines with a number of homogeneous layers. However, this method of interpreting seismic data may result in several issues. For example, seismograms at large distances from the source may be noisy making the onset time of the first wave difficult to identify. As another example, because the first wave for a specified layer may not always be the first arrival, the onset time of the first wave may not be selected. Thus, good data may be wasted and sparse illumination of the subsurface may result. In another example, refraction analysis may be subject to an ambiguous identification problem of the first onset time. Misidentification may prevent analysis of the type of velocity gradient along the refracting interface, which may be an important aspect in lithology identification.

**SUMMARY**

Described herein are implementations of various techniques for a method for estimating one or more ray parameters for seismograms. In one implementation, the ray parameters may be estimated by selecting a reference seismogram from a gather of seismograms, selecting a set of seismograms neighboring the reference seismogram, generating a set of seismic interferograms from the reference seismogram and the selected set of seismograms, slant stacking the set of seismic interferograms to generate a ray parameter seismic interferogram corresponding to the reference seismogram and estimating a ray parameter from the ray parameter seismic interferogram. In another implementation, the set of seismic interferograms may be generated by cross-correlating or spectrally dividing the reference seismogram with each seismogram in the selected set. In yet another implementation, the slant stacking may be accomplished by transforming the delay time axis of each seismic interferogram in the set of seismic interferograms to a ray parameter axis and stacking the set of seismic interferograms transformed to the ray parameter axis to generate the ray parameter seismic interferogram corresponding to the reference seismogram.

The above referenced summary section is provided to introduce a selection of concepts in a simplified form that are further described below in the detailed description section. The summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

## BRIEF DESCRIPTION OF THE DRAWINGS

Implementations of various techniques will hereafter be described with reference to the accompanying drawings. It should be understood, however, that the accompanying drawings illustrate only the various implementations described herein and are not meant to limit the scope of various techniques described herein.

Figure 1 illustrates a flow diagram of a method for estimating the ray parameter for seismograms in accordance with implementations of various techniques described herein.

Figure 2 illustrates a gather of seismograms sorted by source to receiver distance in accordance with implementations of various techniques described herein.

Figure 3 illustrates a portion of a sorted gather in accordance with implementations of various techniques described herein.

Figure 4 illustrates a set of seismic interferograms generated by the cross-correlation or spectral division of the reference seismogram with the set of seismograms in accordance with implementations of various techniques described herein.

Figure 5 illustrates a flow diagram of a method for transforming the delay time axis of each seismic interferogram to the ray parameter axis in accordance with implementations of various techniques described herein.

Figure 6 illustrates one seismic interferogram being transformed from the time delay axis to the ray parameter axis in accordance with implementations of various techniques described herein.

Figure 7 illustrates the set of seismic interferograms transformed to the ray parameter axis being stacked in accordance with implementations of various techniques described herein.

Figure 8 illustrates the combined process of transforming and stacking in accordance with implementations of various techniques described herein.

Figure 9 illustrates the ray parameter gather generated from the seismogram gather of Figure 2 in accordance with implementations of various techniques described herein.

Figure 10 illustrates a computing system, into which implementations of various techniques described herein may be implemented.

## DETAILED DESCRIPTION

The discussion below is directed to certain specific implementations. It is to be understood that the discussion below is only for the purpose of enabling a person with ordinary skill in the art to make and use any subject matter defined now or later by the patent "claims" found in any issued patent herein.

Refraction interferometry techniques were introduced to mitigate problems with traditional method of interpreting seismic data. In refraction interferometry, seismograms may be converted to equivalent seismic interferograms. Seismograms may be converted into seismic interferograms by cross correlating or spectrally dividing two seismograms that have been transformed from the time domain into the frequency domain. Spectral division may also be referred to as deconvolution. The seismograms may be denoted by $X(t)$ and $Y(t)$, with the corresponding Fourier transformed seismograms $\widetilde{X}(f)$ and $\widetilde{Y}(f)$. If defined as the cross-correlation of two seismograms, the Fourier transformed seismic interferogram may be defined as the following:

$$\widetilde{I}(f) = \widetilde{X}(f)\widetilde{Y}(f)^{*}.$$

If defined as the spectral division of two seismograms, the Fourier transformed seismic interferogram may be defined as follows:

$$\widetilde{I}(f) = \frac{\widetilde{X}(f)\widetilde{Y}(f)^{*}}{\left|\widetilde{Y}(f)\right|^{2} + \varepsilon}.$$

The inverse Fourier transform yields the seismic interferogram in the corresponding time domain, here referred to as delay time. In the delay time domain, events may be shown at traveltime differences of the corresponding events in the original seismograms. Hence, the time-axis of seismic interferograms may be called the delay time axis.

Refraction interferometry techniques may be used to combine the two seismograms into one seismic interferogram that contains the difference between the two seismograms, thereby cancelling out all that may be in common between the seismograms, such as unwanted signals. Seismic interferograms and the relative times between refraction arrivals may be analyzed, rather than seismograms and the absolute times of refraction arrivals. Analyzing seismic interferograms may be easier than analyzing seismograms in that the onset time of the first wave may be found by selecting maxima of seismic interferograms rather than selecting first-break traveltimes from the seismograms.

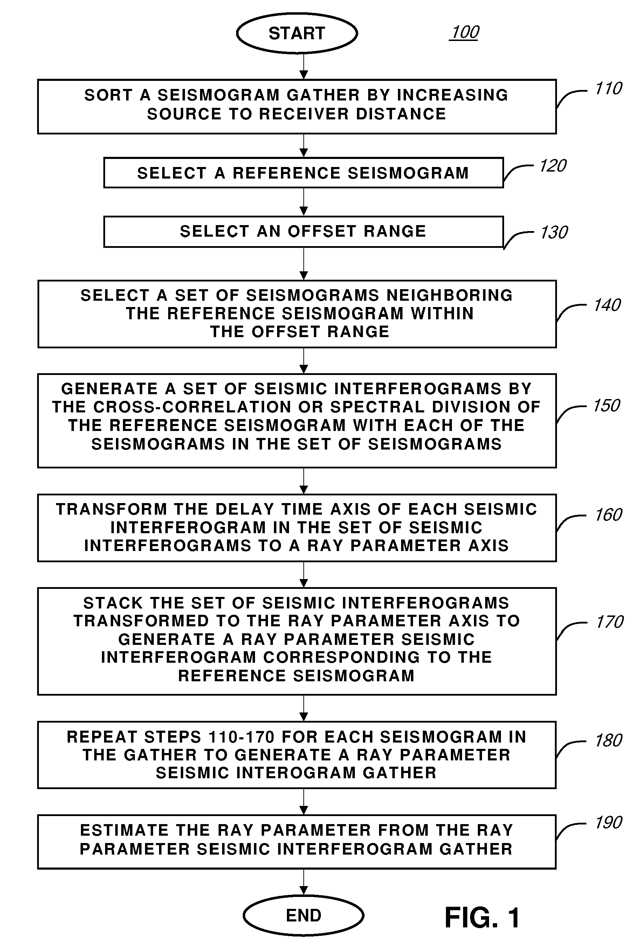

Various techniques described herein are directed to various methods for estimating the ray parameter of seismograms using refraction interferometry techniques. One or more implementations of various techniques for estimating the ray parameter of seismograms will now be described with reference to Figures 1-10 in the following paragraphs.

Figure 1 illustrates a flow diagram 100 of a method for estimating the ray parameter of seismograms in accordance with implementations of various techniques described herein. It should be understood that while the operational flow diagram 100 indicates a particular order of execution of the operations, in other implementations, the operations might be executed in a different order.

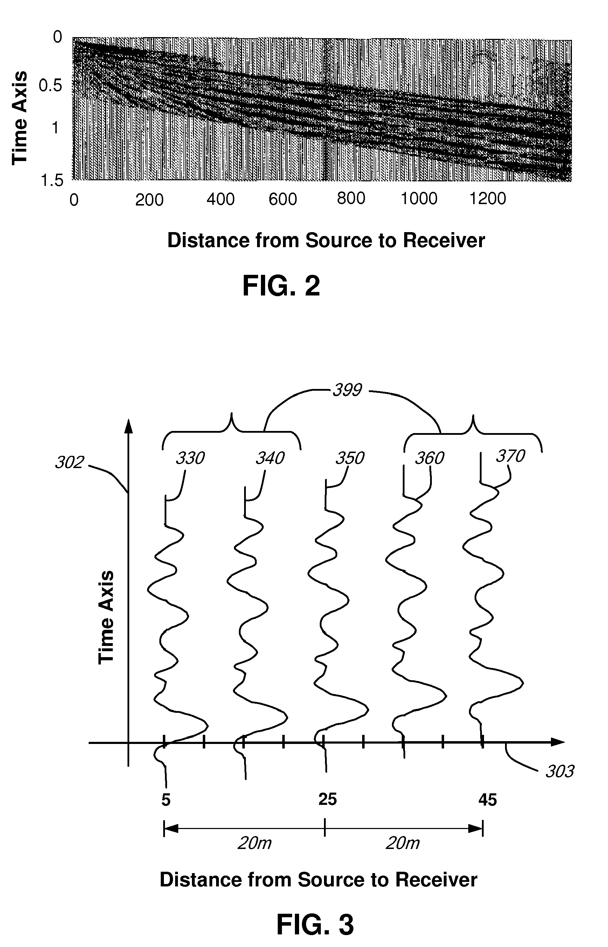

At step 110, a gather of seismograms may be sorted by increasing source to receiver distance. As described above, a gather may consist of a plurality of seismograms recorded at a plurality of receivers as a result of the activation of a source. Each receiver may be located a certain distance from the source. The resulting seismograms may be sorted such that the seismogram recorded at the receiver closest to the source may be the first seismogram in the gather and so on until the seismogram recorded at the receiver farthest from the source may be the last seismogram in the gather. Figure 2 illustrates a gather of seismograms sorted by source to receiver distance in accordance with implementations of various techniques described herein.

At step 120, a reference seismogram may be selected from the sorted gather. Figure 3 illustrates a portion of a sorted gather in accordance with implementations of various techniques described herein. The horizontal axis 303 describes the source to receiver distance. The vertical axis 302 describes the time starting with the time the source was activated. Each recorded vertical wavefield may be a seismogram. A reference seismogram 350 may be selected.

At step 130, an offset range may be selected. The offset range may be a specified distance range around the reference seismogram. The offset range defines the neighborhood around the reference seismogram; all the seismograms within the offset range of the reference seismogram may have similar source to receiver distances. In some implementations, the offset range may be the same regardless of the reference seismogram selected in a gather. In other implementations, the offset range may vary depending on the reference seismogram selected from the gather.

At step 140, a set of seismograms neighboring the reference seismogram within the offset range may be selected. For example, referring again to Figure 3, if an offset range of 20 meters is selected, then seismograms within 20 meters of the reference seismogram may be selected. If the reference seismogram is 25 meters from the source, then seismograms in the range of 5 to 45 meters from the source may be selected. In this example, the seismograms 330, 340, 360 and 370 within the offset range of reference seismogram 350 may be the selected set of seismograms 399. It should be noted that the number of seismograms in the selected set of seismograms may vary depending upon the reference seismogram selected. In the above example, there are four seismograms in the selected set of seismograms. However, in Figure 3, if seismogram 330 is the reference seismogram, only two seismograms 340 and 350 may be within the 20 meter offset range. Thus only, two seismograms 340 and 350 may be in the selected set of seismograms.

At step 150, a set of seismic interferograms may be generated by the cross-correlation or spectral division of the reference seismogram 350 with each of the seismograms in the set of selected seismograms 399. Each cross-correlation or spectral division combines two seismograms, i.e., the reference seismogram 350 and one seismogram from the set of selected seismograms 399, into one seismic interferogram that contains the difference between the two seismograms, cancelling out all that may be in common between the seismograms such as unwanted signals. Each seismogram in the set of selected seismograms 399 may be cross-correlated or spectrally divided with the reference seismogram 350. Hence, as many seismic interferograms may be generated as seismograms in the set of selected seismograms 399. Therefore, the set of seismic interferograms generated by the cross correlation or spectral division may contain the same number of seismic interferograms as there are seismograms in the set of selected seismograms 399.

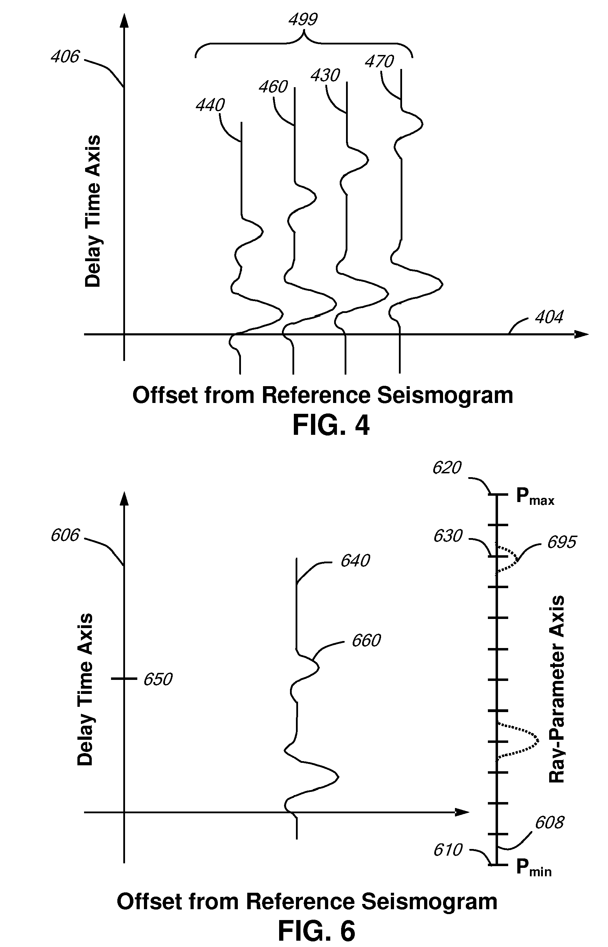

Figure 4 illustrates a set of seismic interferograms 499 generated by the cross-correlation or spectral division of the reference seismogram 350 with the set of seismograms 399 in accordance with implementations of various techniques described herein. For example, the reference seismogram 350 may be cross-correlated with the closest seismogram 340 to generate a seismic interferogram 440. The reference seismogram 350 may then be cross-correlated with the next closest seismogram 360 to generate a second seismic interferogram 460. This may be continued until the reference seismogram 350 has been cross-correlated with each seismogram in the selected set of seismograms 399. Therefore, the set of seismic interferograms 499 may have four seismic interferograms. It should be noted that the set of seismic interferograms 499 may be sorted differently than the set of seismograms as can be seen in Figure 4. The set of seismograms in Figure 3 may be sorted by increasing source to receiver distance. The set of seismic interferograms in Figure 4 may be sorted by increasing offset distance between the reference seismogram and the seismogram being cross-correlated or spectrally divided. Also, the seismic interferograms in Figure 4 may be displayed on the delay time axis 406 while the seismograms in Figure 3 may be displayed on the time axis 302.

At step 160, the delay time axis 406 of each seismic interferogram in the set of seismic interferograms 499 may be transformed to a ray parameter axis. In this manner, the relationship between delay time and ray parameter may be established. The traveltime curve of seismic waves may be locally approximated using straight lines, with the ray parameter as spatial gradient as follows:

$$t(x+h) \approx t(x) + p(x)h \qquad \text{Equation 1}$$

where $t$ is the traveltime, x is the distance of the between the source and receiver that recorded the seismogram, $h$ is the distance between two seismograms and $p$ is the ray parameter as spatial gradient. As such, the traveltime differences, or delay time, may be approximated by:

$$\Delta t(x, h_i, h_j) = t(x+h_i) - t(x+h_j) \approx p(x)(h_i - h_j) \qquad \text{Equation 2}$$

The following scaling may convert delay times into ray parameters:

$$p(x) = \frac{\Delta t(x, h_i, h_j)}{h_i - h_j} \qquad \text{Equation 3}$$

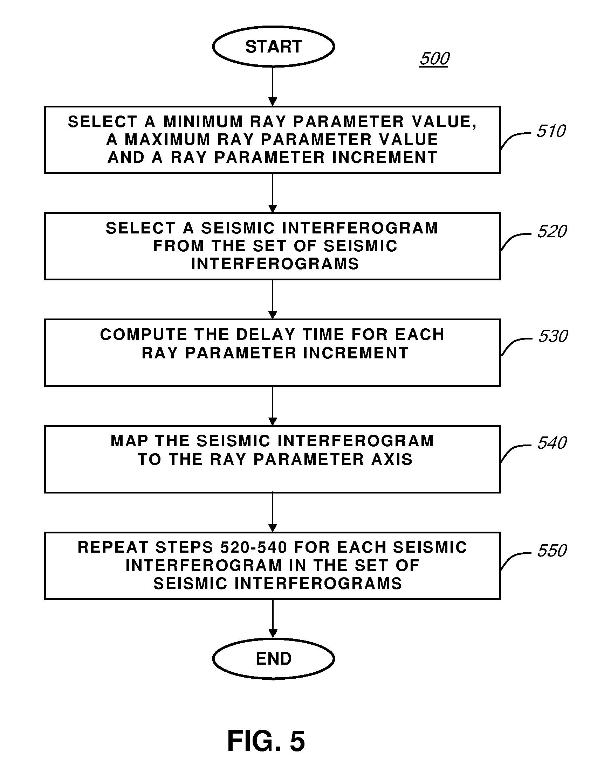

Figure 5 illustrates a flow diagram 500 of a method for transforming the delay time axis of each seismic interferogram to the ray parameter axis in accordance with implementations of various techniques described herein. It should be understood that while the operational flow diagram 100 indicates a particular order of execution of the operations, in other implementations, the operations might be executed in a different order.

At step 510, a minimum ray parameter, maximum ray parameter and ray parameter increment value may be selected. The ray parameter increment value may define the number of ray parameter increments between the ray parameter minimum and ray parameter maximum. For example, if the ray parameter minimum is zero and the ray parameter maximum is 2, then the ray parameter increment value may be selected as 0.1 to define 20 ray parameter increments between the ray parameter minimum and maximum at 0.1, 0.2, 0.3 and so on. The minimum ray parameter, maximum ray parameter and ray parameter increment value define the ray parameter axis. Figure 6 illustrates one seismic interferogram 640 being transformed from the time delay axis 606 to the ray parameter axis 608 in accordance with implementations of various techniques described herein. The ray parameter axis 608 may be defined by the ray parameter minimum 610 and ray parameter maximum 620 on either end of the axis with several ray parameter increments illustrated as short horizontal lines such as 630.

At step 520, a seismic interferogram may be selected from the set of seismic interferograms 499. Continuing with the example above in Figure 6, the seismic interferogram 640 from the set of seismic interferograms 499 may be selected.

At step 530, the delay time for each ray parameter increment p may be computed using a re-written form of Equation 3 as follows.

$$\Delta t(h_i, h_j) = p(h_i - h_j) \qquad \text{Equation 4}$$

It should be noted that the time delay, $\Delta t$, is a function of the offset , $(h_i\text{-}h_j)$, between the two seismograms cross-correlated or spectrally divided to generate the seismic interferogram. Therefore, the delay time for each ray parameter increment varies between seismic interferograms since the offset from the reference seismogram varies between the seismic interferograms in the set of interferograms 499. The delay time for each ray parameter increment, $p$, may be computed separately for each seismic interferogram. Continuing with the example above in Figure 6, the delay time for interferogram 640 at ray parameter increment 630 may be computed to be the delay time at 650 on the delay time axis 606. Each delay time value corresponding to each ray parameter increment may be computed.

At step 540, the seismic interferogram may be mapped to the ray parameter axis. The seismic interferogram may be mapped to the ray parameter axis by determining a seismic interferogram value at each computed delay time, plotting each seismic interferogram value on the ray parameter axis at the ray parameter increment corresponding to the computed delay time and interpolating the remainder of the seismic interferogram on the ray parameter axis. Continuing with the example above in Figure 6, the value 660 of the seismic interferogram 640 at delay time 650 may be determined. Then the value 660 of the seismic interferogram 640 may be plotted on the ray parameter axis 608 at the corresponding ray parameter increment 630. Each value of the seismic interferogram 640 at the corresponding computed delay times may be plotted on the ray parameter axis 608. After all the values of the seismic interferogram 640 at each computed delay time have been plotted on the ray parameter axis 608 at the corresponding ray parameter increments, the remainder of the seismic interferogram 640 may be interpolated on the ray parameter axis 608 to generate a transformed seismic interferogram 695.

To complete step 160, steps 520-540 may be repeated for each interferogram to transform the delay time axis 406 of each seismic interferogram in the set of seismic interferograms 499 to the ray parameter axis 608. The transformation normalizes the time shift between neighboring seismic interferograms and automatically aligns the maximum amplitudes of the seismic interferograms in the set of seismic interferograms, thus, preparing the seismic interferograms to be stacked.

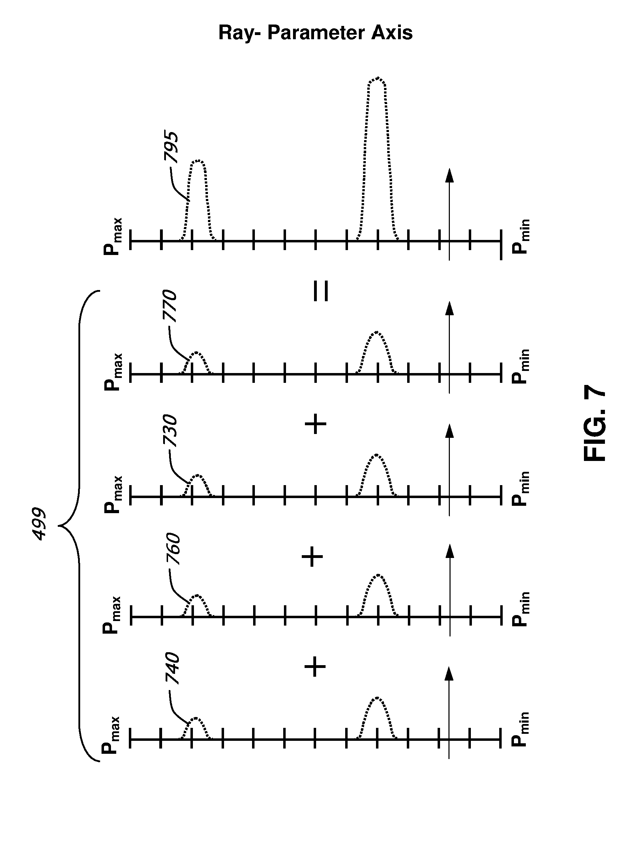

At step 170, the set of seismic interferograms 499 transformed to the ray parameter axis may be stacked to generate a ray parameter seismic interferogram. The ray parameter seismic interferogram corresponds to the reference seismogram 350 with improved signal to noise ratio. Figure 7 illustrates the set of seismic interferograms 499 transformed to the ray parameter axis being stacked in accordance with implementations of various techniques described herein. The seismic interferograms 740, 760, 730 and 770 transformed to the ray parameter axis may be stacked, or summed, to generate a ray parameter seismic interferogram 795 that corresponds to the reference seismogram 350.

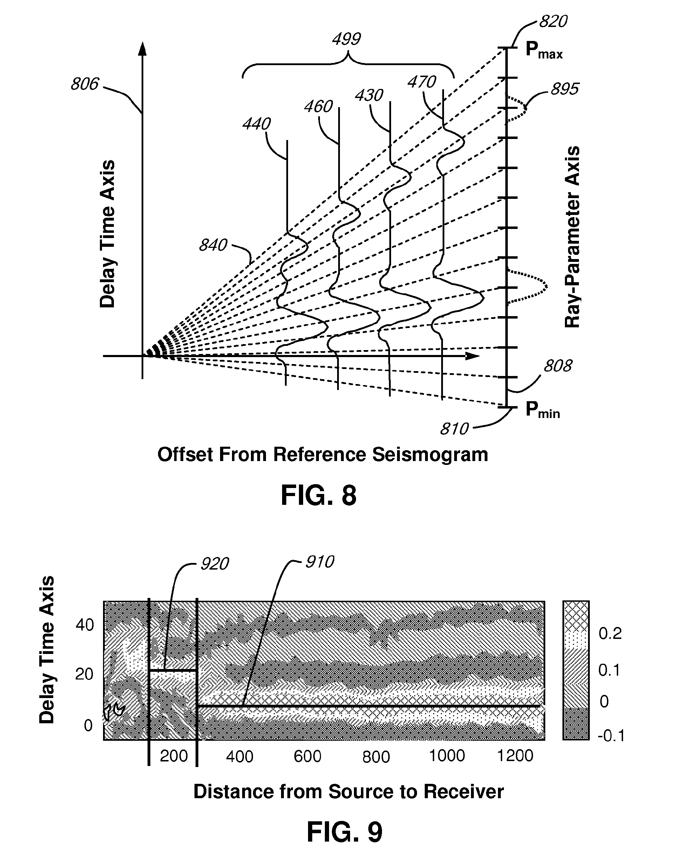

Ray parameter transforming and stacking, shown in steps 160-170, may be combined in one operation. Because the set of seismic interferograms may be sorted by increasing offset distance between the reference seismogram and the seismogram being cross-correlated or spectrally divided, the ray parameter transforming combined with stacking may be interpreted as "slant-stacking" of the seismic interferograms along straight lines converging at the zero delay time and zero offset origin. Figure 8 illustrates the combined process of transforming and stacking in accordance with implementations of various techniques described herein. As in step 160, a minimum ray parameter 810, maximum ray parameter 820 and ray parameter increment may be selected. For each discrete ray parameter value $p$, the corresponding time delay may be computed using Equation 4. A ray parameter axis 808 corresponding to the time delay axis 806 may then be displayed as in Figure 8. The set of seismic interferograms 499 may then be transformed and stacked by "slant-stacking" along straight lines 840 from the zero delay time and zero offset origin to the ray parameter axis 808. The seismic interferogram on the ray parameter axis 806 illustrates the stacked ray parameter seismic interferogram 895 that corresponds to the reference seismogram 350.

At step 180, steps 110 to 170 may be repeated for each seismogram in the gather to generate a ray parameter seismic interferogram gather where each seismogram in the gather may be represented by a corresponding ray parameter seismic interferogram. Figure 9 illustrates the ray parameter gather generated from the seismogram gather of Figure 2 in accordance with implementations of various techniques described herein. The scale in Figure 9 illustrates the amplitude of the ray parameter seismic interferograms.

At step 190, a ray parameter may be estimated from the ray parameter seismic interferogram gather. Estimating the ray parameter may be accomplished by selecting the maximum amplitude of one or more ray parameter seismic interferograms and assigning the ray parameter value at the maximum amplitude as the ray parameter as a function of source to receiver offset. Estimating ray parameter as a function of source to receiver offset for a ray parameter seismic interferogram gather yields a ray parameter offset function. Continuing with the above example, in Figure 9, a ray parameter value may be selected at the maximum amplitude of the ray parameter seismic interferogram. As shown, a constant ray parameter value 910 may be observed for ray parameter seismic interferograms calculated from seismograms recorded approximately 280 meters and more from the source. For smaller source to receiver distances, a higher ray parameter 920 is visible.

The ray parameter may be used in various applications for further seismic data processing. In one implementation, the ray parameter offset function may be used to estimate a velocity depth profile using for example the Wiechert-Herglotz inversion technique. In another implementation, the ray parameter offset function may be used to slant-stack the seismograms locally to improve the signal to noise ratio before automatically selecting traveltimes.

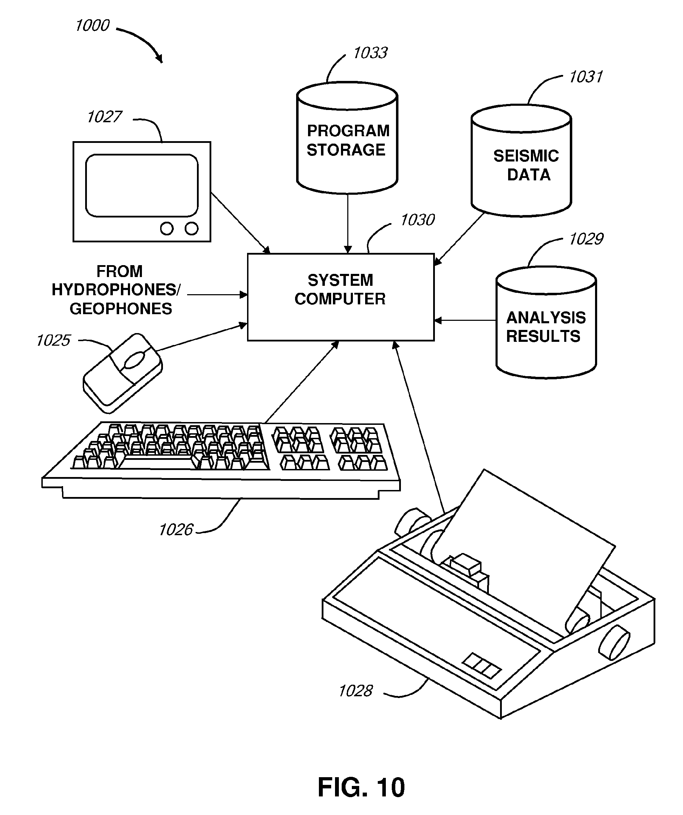

Figure 10 illustrates a computing system 1000, into which implementations of various techniques described herein may be implemented. The computing system 1000 may include one or more system computers 1030, which may be implemented as any conventional personal computer or server. However, those skilled in the art will appreciate that implementations of various techniques described herein may be practiced in other computer system configurations, including hypertext transfer protocol (HTTP) servers, hand-held devices, multiprocessor systems, microprocessor-based or programmable consumer electronics, network PCs, minicomputers, mainframe computers, and the like.

The system computer 1030 may be in communication with disk storage devices 1029, 1031, and 1033, which may be external hard disk storage devices. It is contemplated that disk storage devices 1029, 1031, and 1033 are conventional hard disk drives, and as such, will be implemented by way of a local area network or by remote access. Of course, while disk storage devices 1029, 1031, and 1033 are illustrated as separate devices, a single disk storage device may be used to store any and all of the program instructions, measurement data, and results as desired.

In one implementation, seismic data from the receivers may be stored in disk storage device 1031. The system computer 1030 may retrieve the appropriate data from the disk storage device 1031 to process seismic data according to program instructions that correspond to implementations of various techniques described herein. The program instructions may be written in a computer programming language, such as C++, Java and the like. The program instructions may be stored in a computer-readable medium, such as program disk storage device 1033. Such computer-readable media may include computer storage media and communication media. Computer storage media may include volatile and nonvolatile, and removable and non-removable media implemented in any method or technology for storage of information, such as computer-readable instructions, data structures, program modules or other data. Computer storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium which can be used to store the desired information and which can be accessed by the system computer 1030. Communication media may embody computer readable instructions, data structures, program modules or other data in a modulated data signal, such as a carrier wave or other transport mechanism and may include any information delivery media. The term "modulated data signal" may mean a signal that has one or more of its characteristics set or changed in such a manner as to encode information in the signal. By way of example, and not limitation, communication media may include wired media such as a wired network or direct-wired connection, and wireless media such as acoustic, RF, infrared and other wireless media. Combinations of any of the above may also be included within the scope of computer readable media.

In one implementation, the system computer 1030 may present output primarily onto graphics display 1027, or alternatively via printer 1028. The system computer 1030 may store the results of the methods described above on disk storage 1029, for later use and further analysis. The keyboard 1026 and the pointing device (e.g., a mouse, trackball, or the like) 1025 may be provided with the system computer 1030 to enable interactive operation.

The system computer 1030 may be located at a data center remote from the survey region. The system computer 1030 may be in communication with the receivers (either directly or via a recording unit, not shown), to receive signals indicative of the reflected seismic energy. These signals, after conventional formatting and other initial processing, may be stored by the system computer 1030 as digital data in the disk storage 1031 for subsequent retrieval and processing in the manner described above. While Figure 10 illustrates the disk storage 1031 as directly connected to the system computer 1030, it is also contemplated that the disk storage device 1031 may be accessible through a local area network or by remote access. Furthermore, while disk storage devices 1029, 1031 are illustrated as separate devices for storing input seismic data and analysis results, the disk storage devices 1029, 1031 may be implemented within a single disk drive (either together with or separately from program disk storage device 1033), or in any other conventional manner as will be fully understood by one of skill in the art having reference to this specification.

While the foregoing is directed to implementations of various techniques described herein, other and further implementations may be devised without departing from the basic scope thereof, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A method of estimating one or more ray parameters for seismograms, comprising:

   (a) selecting a reference seismogram from a gather of seismograms;
   (b) selecting a set of seismograms neighboring the reference seismogram;
   (c) generating a set of seismic interferograms from the reference seismogram and the selected set of seismograms;
   (d) slant stacking the set of seismic interferograms to generate a ray parameter seismic interferogram corresponding to the reference seismogram; and

# EP 2 073 041 A1

(e) estimating a ray parameter from the ray parameter seismic interferogram.

2. The method of claim 1, further comprising:

repeating steps (a) - (e) for each seismogram in the gather to generate a ray parameter seismic interferogram gather; and
using the ray parameter seismic interferogram gather to estimate a velocity depth profile.

3. The method of claim 1 or 2, wherein the gather has been sorted by source to receiver distance.

4. The method of claim 1, 2 or 3, further comprising: selecting an offset range around the reference seismogram to define the neighboring set of seismograms.

5. The method of any preceding claim, wherein generating the set of seismic interferograms from the reference seismogram and the selected set of seismograms comprises: cross-correlating the reference seismogram with each seismogram in the selected set.

6. The method of any of claims 1 to 4, wherein generating the set of seismic interferograms from the reference seismogram and the selected set of seismograms comprises: spectrally dividing the reference seismogram with each seismogram in the selected set.

7. The method of any preceding claim, wherein slant stacking the set of seismic interferograms to generate the ray parameter seismic interferogram further comprises: slant stacking the set of seismic interferograms along lines that converge at a zero delay time and zero offset origin.

8. The method of any one of claims 1 to 6, wherein slant stacking the set of seismic interferograms to generate the ray parameter seismic interferogram comprises:

transforming a delay time axis of each seismic interferogram in the set of seismic interferograms to a ray parameter axis; and
stacking the set of seismic interferograms transformed to the ray parameter axis to generate the ray parameter seismic interferogram corresponding to the reference seismogram.

9. The method of claim 8, wherein transforming the delay time axis of each seismic interferogram in the set of seismic interferograms to the ray parameter axis comprises:

selecting a minimum ray parameter, a maximum ray parameter and a ray parameter increment value to create a ray parameter axis having ray parameter increments;
selecting a seismic interferogram from the set of seismic interferograms;
computing a delay time specific to the selected seismic interferogram for each ray parameter increment;
mapping the selected seismic interferogram to the ray parameter axis; and
repeating for each seismic interferogram in the set of seismic interferograms.

10. The method of claim 9, wherein mapping the selected seismic interferogram to the ray parameter axis comprises:

determining a seismic interferogram value at each computed delay time;
plotting each seismic interferogram value on the ray parameter axis at the ray parameter increment corresponding to the computed delay time; and
interpolating the remainder of the seismic interferogram on the ray parameter axis.

11. The method of any preceding claim, wherein estimating the ray parameter from the ray parameter seismic interferogram comprises:

selecting a maximum amplitude of the ray parameter seismic interferogram; and
assigning a ray parameter value at the maximum amplitude as the ray parameter.

12. A computer system for estimating one or more ray parameters for seismograms, comprising:

a processor; and
a memory comprising program instructions executable by the processor to perform a method as defined in any one of claims 1-11.

START *100*

SORT A SEISMOGRAM GATHER BY INCREASING SOURCE TO RECEIVER DISTANCE — *110*

SELECT A REFERENCE SEISMOGRAM — *120*

SELECT AN OFFSET RANGE — *130*

SELECT A SET OF SEISMOGRAMS NEIGHBORING THE REFERENCE SEISMOGRAM WITHIN THE OFFSET RANGE — *140*

GENERATE A SET OF SEISMIC INTERFEROGRAMS BY THE CROSS-CORRELATION OR SPECTRAL DIVISION OF THE REFERENCE SEISMOGRAM WITH EACH OF THE SEISMOGRAMS IN THE SET OF SEISMOGRAMS — *150*

TRANSFORM THE DELAY TIME AXIS OF EACH SEISMIC INTERFEROGRAM IN THE SET OF SEISMIC INTERFEROGRAMS TO A RAY PARAMETER AXIS — *160*

STACK THE SET OF SEISMIC INTERFEROGRAMS TRANSFORMED TO THE RAY PARAMETER AXIS TO GENERATE A RAY PARAMETER SEISMIC INTERFEROGRAM CORRESPONDING TO THE REFERENCE SEISMOGRAM — *170*

REPEAT STEPS 110-170 FOR EACH SEISMOGRAM IN THE GATHER TO GENERATE A RAY PARAMETER SEISMIC INTEROGRAM GATHER — *180*

ESTIMATE THE RAY PARAMETER FROM THE RAY PARAMETER SEISMIC INTERFEROGRAM GATHER — *190*

END

FIG. 1

**Distance from Source to Receiver**

## FIG. 2

**Distance from Source to Receiver**

## FIG. 3

**Offset from Reference Seismogram**

## FIG. 4

**Offset from Reference Seismogram**

## FIG. 6

START

*500*

SELECT A MINIMUM RAY PARAMETER VALUE,
A MAXIMUM RAY PARAMETER VALUE
AND A RAY PARAMETER INCREMENT — *510*

SELECT A SEISMIC INTERFEROGRAM
FROM THE SET OF SEISMIC
INTERFEROGRAMS — *520*

COMPUTE THE DELAY TIME FOR EACH
RAY PARAMETER INCREMENT — *530*

MAP THE SEISMIC INTERFEROGRAM
TO THE RAY PARAMETER AXIS — *540*

REPEAT STEPS 520-540 FOR EACH SEISMIC
INTERFEROGRAM IN THE SET OF
SEISMIC INTERFEROGRAMS — *550*

END

# FIG. 5

Ray- Parameter Axis

FIG. 7

**Offset From Reference Seismogram**

**FIG. 8**

**Distance from Source to Receiver**

**FIG. 9**

_1000_

_1033_

PROGRAM STORAGE

_1031_

SEISMIC DATA

_1027_

FROM HYDROPHONES/ GEOPHONES

_1030_

SYSTEM COMPUTER

_1029_

ANALYSIS RESULTS

_1025_

_1026_

_1028_

## FIG. 10

Europäisches
Patentamt

European
Patent Office

Office européen
des brevets

# EUROPEAN SEARCH REPORT

**Application Number**

EP 08 17 2011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 203 161 A (JOHNSON JAY P [US] ET AL) 13 May 1980 (1980-05-13) * column 2, line 43 - line 53 * * column 3, line 12 - line 18 * * column 7, line 11 - line 17 * * column 8, line 55 - line 59 * * column 10, line 40 - line 47 * * column 10, line 61 - column 11, line 2 * * figure 5 * | 1,2,5 | INV. G01V1/32 |
| A | US 5 392 213 A (HOUSTON LOUIS M [US] ET AL) 21 February 1995 (1995-02-21) * column 4, line 6 - line 34 * * column 5, line 33 - line 51 * * column 6, line 55 - line 68 * * column 8, line 8 - line 11 * | 1-12 | |
| A | US 6 092 025 A (NEFF DENNIS B [US]) 18 July 2000 (2000-07-18) * column 3, line 19 - line 26 * * column 4, line 62 - column 5, line 2 * * column 5, lines 12,13 * | 1-12 | |
| A | US 5 173 879 A (CUNG VU K [US] ET AL) 22 December 1992 (1992-12-22) * column 2, line 47 - line 68 * * column 6, line 36 - line 68 * * column 7, line 1 - line 46 * * claim 1 * | 1-12 | TECHNICAL FIELDS SEARCHED (IPC)  G01V |
| A | US 4 206 509 A (RUEHLE WILLIAM H [US]) 3 June 1980 (1980-06-03) * column 2, line 15 - line 25 * * column 3, line 45 - line 63 * * column 4, line 35 - line 61 * | 1-12 | |

The present search report has been drawn up for all claims

| Place of search | Date of completion of the search | Examiner |
|---|---|---|
| Munich | 4 March 2009 | Schneiderbauer, K |

EPO FORM 1503 03.82 (P04C01)

## ANNEX TO THE EUROPEAN SEARCH REPORT
## ON EUROPEAN PATENT APPLICATION NO.

EP 08 17 2011

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2009

| Patent document cited in search report | | Publication date | Patent family member(s) | | Publication date |
|---|---|---|---|---|---|
| US 4203161 | A | 13-05-1980 | NONE | | |
| US 5392213 | A | 21-02-1995 | NONE | | |
| US 6092025 | A | 18-07-2000 | AU | 742887 B2 | 17-01-2002 |
| | | | AU | 1336800 A | 13-06-2000 |
| | | | CA | 2349840 A1 | 02-06-2000 |
| | | | EP | 1141750 A1 | 10-10-2001 |
| | | | NO | 20012462 A | 16-07-2001 |
| | | | WO | 0031567 A1 | 02-06-2000 |
| US 5173879 | A | 22-12-1992 | NONE | | |
| US 4206509 | A | 03-06-1980 | NONE | | |

EPO FORM P0459

For more details about this annex : see Official Journal of the European Patent Office, No. 12/82